# EUROPÄISCHE PATENTSCHRIFT

(11) **EP 1 181 092 B1**
(45) Veröffentlichungstag und Bekanntmachung des Hinweises auf die Patenterteilung: **07.03.2007**
(21) Anmeldenummer: 00916976.4
(22) Anmeldetag: 18.03.2000
(51) Int. Cl.: B01J 19/02, C01B 25/455

(54) **VORRICHTUNG ZUR HERSTELLUNG VON KORROSIVEN PHOSPHATSCHMELZEN**
DEVICE FOR PRODUCING CORROSIVE PHOSPHATE MELTS
DISPOSITIF POUR PRODUIRE DES MASSES FONDUES DE PHOSPHATE CORROSIVES

(30) Priorität: 29.03.1999 DE 19914165
(43) Veröffentlichungstag der Anmeldung: 27.02.2002
(73) Patentinhaber: BK Giulini GmbH, 67065 Ludwigshafen (DE)
(72) Erfinder: TÄNZLER, Richard, D-69514 Laudenbach (DE); HUMMES, Hans, Walter, D-68526 Ladenburg (DE); STAFFEL, Thomas, D-67269 Grünstadt (DE); WAHL, Friedrich, D-68219 Mannheim (DE); KLEIN, Thomas, D-69121 Heidelberg (DE); DIEZ, Friedhelm, D-68259 Mannheim (DE)
(86) Internationale Anmeldenummer: PCT/EP2000/002422
(87) Internationale Veröffentlichungsnummer: WO 2000/058004

(56) Entgegenhaltungen:
- EP-A- 0 095 145
- EP-A- 0 362 746
- DD-A- 287 472
- GB-A- 1 544 197

## Beschreibung

Die vorliegende Erfindung betrifft eine neue Vorrichtung zur Herstellung von korrosiven Phosphatschmeizen.

Die technische Herstellung einer Reihe von Phosphaten verläuft über eine äußerst aggressive und korrosiv wirkende Schmelzphase. Dabei war es schon immer ein Problem bei der Herstellung derartiger Verbindungen, das richtige Material für die entsprechenden Reaktorbehälter zu finden, die diesen Bedingungen standhalten können. Als besonders kritisch hat sich die Herstellung von Fluorophosphaten und von langkettigen oligomeren Alkalipolyphosphaten erwiesen.

Für die Herstellung derartiger aus der Schmelzphase gewonnener Produkte sind in der Literatur eine Reihe von technisch verfügbaren Werkstoffen für Reaktoren bekannt. Grundsätzlich werden Werkstoffe durch mechanische Scherkräfte und chemische und thermische Korrosion beansprucht.

So wurde in der US 3,463,605 ein Reaktor für die Herstellung von Alkalimonofluorophosphat beschrieben. Dieser Reaktor ist dadurch gekennzeichnet, daß er eine Innenauskleidung aus Graphit aufweist. Der Graphit hat eine gute thermische und chemische Stabilität. Gegen die beschriebenen Schmelzen ist der Graphit stabil und die Schmelze greift nicht die Reaktorwände an. Ein großer Nachteil des Werkstoffs besteht jedoch darin, daß der Graphit aufgrund seiner Schichtstruktur und die relative Weichheit der Materials bei Belastung durch mechanische Scherkräfte durch Abrieb (Abrasion) feine Graphitteilchen freisetzt, die sich im Produkt wiederfinden. Dies führt zur Vergrauung des Produktes. Dies ist jedoch bei vielen Produkten nicht akzeptabel, z.B. muß Alkalimonofluorophosphat hohen Reinheitsanforderungen genügen, wenn es in der Kosmetik, in Zahnpasten und in der pharmazeutischen Industrie, z.B. als Ostereoporosemittel eingesetzt wird.

Als ein weiteres Reaktormaterial zur Herstellung von Alkalimonofluorophosphat sind das Edelmetall Platin und einige seiner Legierungen bekannt. Solche Reaktoren sind jedoch sehr teuer, vor allem zeigt das Platin bei höheren Temperaturen und langen Standzeiten das Phänomen der Rekristallisation, d.h. es bildet sich das metallische Gitter in eine kristalline Struktur um, was mit Rißbildung verbunden ist und die Standzeiten eines solchen Reaktors bei einer großtechnischen und kontinuierlichen Verfahrensweise begrenzt.

In der DE 40 01 430 ist ein Schmelztiegel aus Platinrhodiumlegierung bei der Herstellung von Alkalimonofluorophosphat beschrieben. Diese Vorrichtung ist wegen der begrenzten Standzeiten des Reaktors kostenintensiv und begrenzt und konnte sich aufgrund der eingangs geschilderten Probleme, insbesondere aufgrund der hohen Kosten nicht durchsetzen.

Aus der EP 362 746 ist bekannt, bei der Herstellung von Alkalimonofluorophosphat einen rohrförmigen Reaktor, bestehend aus Glaskohlenstoff zu verwenden. Dieser Reaktor wird von einem lsoliermantel, vorzugsweise aus Graphit umgeben. Der Hohlraum zwischen Reaktor und Graphitmantel ist mit einem Inertgas gefüllt, um den Graphitmantel vor Oxydation zu schützen, der Reaktor ist gasdicht. Die Beheizung des Reaktors kann im Graphitmantel durch Heizelemente oder induktiv erfolgen. Da der Glaskohlenstoffreaktor nicht direkt mit dem Graphitmantel in Kontakt steht, erfolgt die Wärmeübertragung durch Strahlungswärme. Der Wirkungsgrad der Energieübertragung ist hierdurch noch unbefriedigend. Es ist weiter bekannt, daß Glaskohlenstoff zwar chemisch eine besonders gute Stabilität aufweist, aber daß er mechanisch leicht zu Bruch neigt, weil Glaskohlenstoff glasähnliche Eigenschaften besitzt und die Gefahr mechanischer Überlastungen auftritt und zum Bruch des Werkstoffs führt.
Hinzukommt, daß bei marktüblichen Reaktor-Ofen-Kombinationen die Steuerung der Reaktionsparameter nicht in ausreichend engen Grenzen möglich ist und daher nicht die an die Produkte gestellten Anforderungen realisiert werden können.

Es bestand daher die Aufgabe, eine Vorrichtung zu finden, die aufgrund ihrer Innenauskleidung und Konstruktionsweise geeignet ist, korrosiv wirkende Phosphatschmelzen herzustellen. Der Reaktor ist erfindungsgemäß so ausgelegt, daß die Herstellbedingungen bzw. die Verfahrensparameter, z.B. Temperaturen, das Verhältnis der Ausgangsmaterialien. Drücke, Reaktionszeiten, Wasserdampfpartialdruck und/oder Sauerstoffpartialdruck in engen Grenzen einstellbar sind. Auf diese Weise kann dieser Reaktor eine ökonomische, großtechnische Synthese bzw. Produktion ermöglichen.

Das Problem wurde gelöst durch eine Vorrichtung, die unten Ansprüchen 1-4 beschrieben wird. Diese neuartige Anordnung überwindet die mechanischen Instabilitäten des Glaskohlenstoffs und nutzt zusätzlich die mechanische Stabilität des Graphits und die chemische Inertheit des Glaskohlenstoffs. Auf diese Weise wird es ermöglicht, diese Schmelzreaktoren für die Herstellung von Phosphatschmelzen in technischem Maßstab durchzuführen.

Die Vorrichtung kann in zwei Ausführungsformen gebaut werden. Die vorliegende Erfindung betrifft die zweite Form.
1. Wenn das Ausgangsmaterial in flüssiger Form aufgegeben werden muß, wie im Fall der Herstellung von sauren Polyphosphaten, so wird diese Vorrichtung in einen in Segmenten beheizbaren Röhrenreaktor eingebaut, damit es möglich wird, den Schmelzofen horizontal auszurichten. So lassen sich die Reaktionsparameter sehr exakt einstellen. Dies wird im wesentlichen auch dadurch erreicht, daß die Energie/Wärme-Übertragung durch die Art des Aufbaus nicht durch Strahlungswärme, sondern durch Wärmeleitung bewerkstelligt werden kann.
   Das Graphitmaterial liegt in Form von 1 - 10, insbesondere 1 - 5 cm dicken Platten vor, die wiederum mit einer Glaskohlenstoffschicht bedeckt bzw. beschichtet sind. Die Glaskohlenstoffschicht kann chemisch z.B. nach dem Verfahren des JP 10095668 auf einer Graphitunterlage erzeugt werden oder auch durch Auflegen der Glaskohlenstoffplatten auf die Graphitoberfläche aufgebracht werden. In beiden Fällen haben die beiden Werkstoffschichten unmittelbaren Kontakt ohne Zwischenräume miteinander.
   Aufgelegte Platten haben eine Dicke von 0,2 - 10, vorzugsweise 0,5 - 1,0 mm, chemisch erzeugte Glaskohlenstoffschichten eine Dicke von 0,01 - 0,5, vorzugsweise 0,05 - 0,1 mm.
2. Wenn die Ausgangsmaterialien in fester Form in die Vorrichtung gelangen, z.B. im Fall der Herstellung von Alkalimonofluorophosphaten, dann wird der Reaktor als Rohr horizontal aufgestellt und weist einen dreischichtigen Wandaufbau auf. Die Reaktorwand ist aus folgenden Materialien aufgebaut: die äußere Wand besteht aus einem keramischen, feuerfesten Material, z.B. Silimannit. Es folgt eine Schicht, die kleine, homogene Graphitkugeln (Durchmesser 1,0 - 10 mm) enthält. Die aus den Kugeln aufgebaute Graphitwand stützt den Glaskohlenstoff mechanisch, bewirkt weiterhin einen Ausgleich in der thermischen Ausdehnung aufgrund der unterschiedlichen thermischen Ausdehnungskoeffizienten der beiden Materialien. Die innere Schicht dieses Röhrenreaktors besteht aus Glaskohlenstoff, der ebenfalls in Kontakt mit der Graphitschicht steht und somit die Wärme überleitet. Diese innere Schicht besteht entweder aus einem zylindrischen Rohr oder aus 3 - 6, zu einem Schacht zusammengefügten ebenen Platten.

Vorrichtungen sind in den beigefügten Figuren beschrieben.
**Figur 1** zeigt einen Längsschnitt durch einen waagerecht liegenden Reaktor.
**Figur 2** zeigt einen Querschnitt durch den Reaktor von Figur 1.
**Figur 3** zeigt vergrößert den Zulaufteil von Figur 1.
**Figur 4** zeigt vergrößert den Ablaufteil von Figur 1.
**Figur 5** zeigt den oberen Teil eines senkrechten Röhrenreaktors.

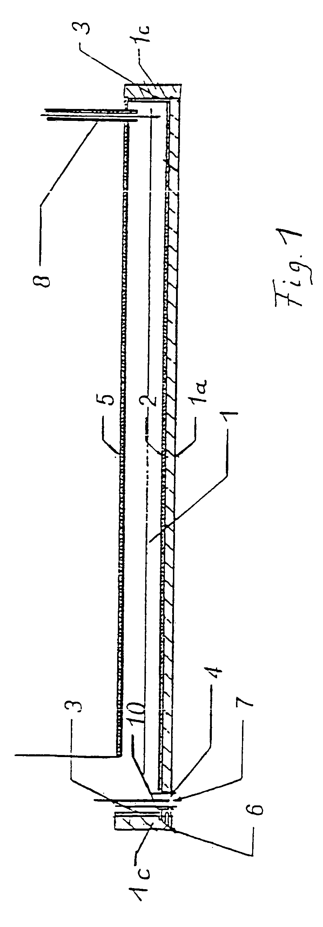

Im Einzelnen zeigt **Figur 1** einen waagerechten Reaktor 1 mit einem aus Graphit bestehenden Außenkörper, welcher aus dem Boden 1 a, den Längswänden 1 b und den Stirnwänden 1 c besteht. Der Boden 1 a ist mit der Glaskohlenstoffplatte 2 abgedeckt, die Stirnwände 1 c mit den Glaskohlenstoffplatten 3. Als obere Abdeckung wirkt eine weitere Glaskohlenstoffplatte 5.

Durch die Abdeckung 5 ist ein ebenfalls aus Glaskohlenstoff bestehendes Zuleitungsrohr 8 geführt, durch welches die flüssigen Ausgangsmaterialien zugeführt werden. Am entgegengesetzten Ende des Reaktors ist im Boden 1a und in der Abdeckung 2 ein Auslaß 4 für die gebildete Schmelze vorgesehen, welcher mit einem Glaskohlenstoffrohr 7 ausgekleidet ist, um die Graphitwand zu schützen. Um die Glaskohlenstoffplatten mechanisch zu fixieren, sind in den Graphitwänden und in den stumpf anstoßenden Glaskohlenstoffflächen Nuten 10 vorgesehen, in die die Stoßkante der aufstehenden Glaskohlenstoffplatte eingreift. Die Stirnwände 1c werden mittels Schrauben 6 oder anderen Klemmvorrichtungen gegen den Boden 1a und die Seitenwände 1 b mit ihren Abdeckungen 2 und 3 gedrückt und halten so die Vorrichtung dicht. Die ganze Vorrichtung befindet sich bei der Verwendung im Hohlraum eines Röhrenofens (nicht dargestellt), aus dem lediglich die Zu- und Ableitungen 8 und 7 herausführen. Wegen der Oxidationsempfindlichkeit des Graphits bei hohen Temperaturen ist dieser Hohlraum mit Stickstoff oder CO₂ zu Spülen.

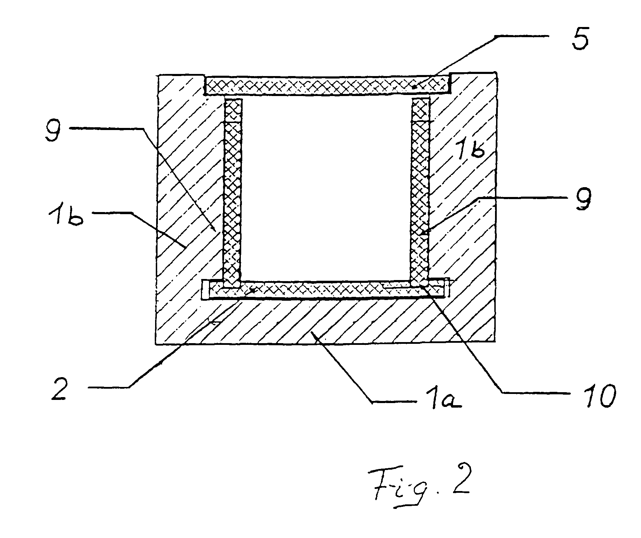

**Figur 2** zeigt einen Querschnitt durch den Reaktor 1 mit dem Boden 1 a und den Seitenwänden 1 b aus Graphit, den Glaskohlenstoffabdeckungen 2 und 9 und der oberen Abdeckung 5. Nuten 10 in den Seitenwänden 1 b und der Bodenplatte 2 fixieren die eingesetzten Platten.

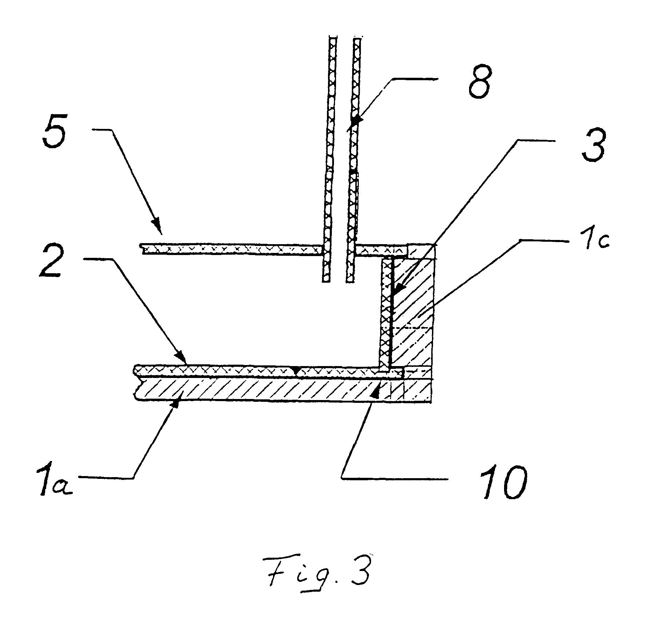

**Figur 3** zeigt vergrößert den Einlaßbereich gemäß Figur 1, wobei die Nuten 10, durch die die Platten 2 und 3 fixiert werden, herausgehoben sind. Alle übrigen Teile sind wie in Figur 1 beziffert.

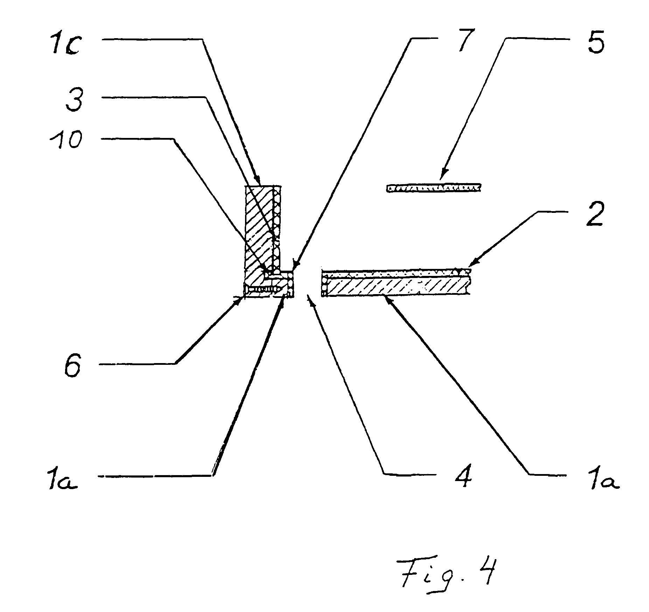

**Figur 4** zeigt vergrößert den Auslaßbereich, der deutlicher die Verbindung der Platten über die Nuten 10 sowie die Verschraubung 6 erkennen läßt. Auch hier sind alle Teile wie in Figur 1 beziffert.

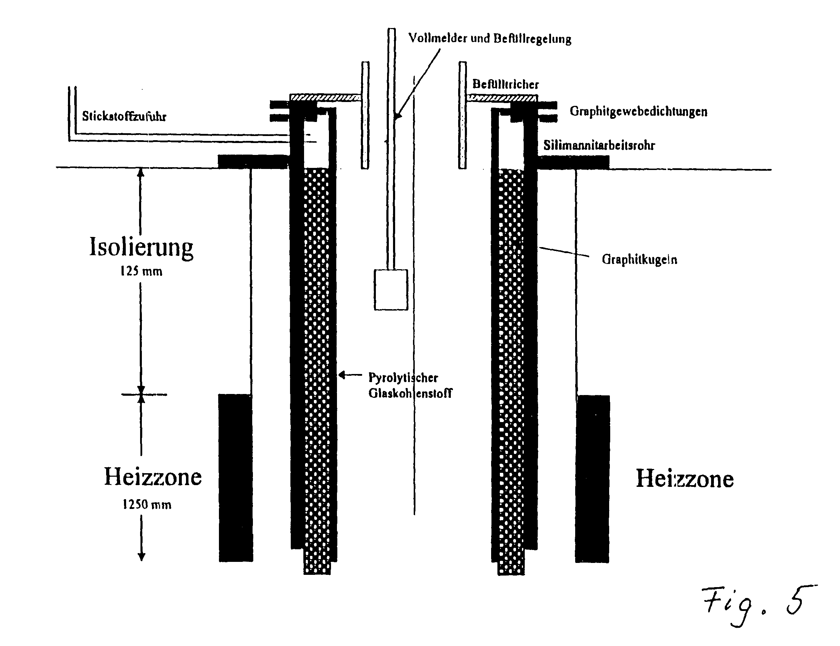

**Figur 5** zeigt einen senkrechten Reaktor 21 mit einer Innenwand 22, die entweder als geschlossenes Rohr oder als rechteckiger Schacht aus vier aneinandergefügten Platten aus Glaskohlenstoff besteht, einer Zwischenschicht 23 aus Graphitkugeln oder Granulaten und einer Außenwand.24 aus Keramik oder Asbest, wobei Innen- und Außenwand 22/24 über Flanschverbindungen 25 gegeneinander befestigt sind.
Der Reaktor 21 ist mit einem Heizmantel 26 umgeben, welcher seinerseits nach außen mit einer Wärmeisolierung umgeben ist, die aus zeichnerischen Gründen nicht dargestellt wurde. Um eine Oxidation der Graphitkugeln der Zwischenschicht 23 bei höheren Reaktortemperaturen zu vermeiden, kann diese Schicht über eine Stickstoffzufuhr 27 sauerstofffrei gespült werden. Ein Befülltrichter 28 sorgt dafür, daß die festen Ausgangsmaterialien beim Eingeben nicht direkt an die mechanisch empfindliche Wand 22 anschlagen. Ferner ist in der Zeichnung noch ein Füllstandsmeider 29 angegeben, der eine automatische Nachfüllung erlaubt.

Die nachfolgenden Beispiele, die nicht beschränkend sind, beschreiben die Erfindung näher:

### Beispiel 1: Herstellung von sauren Polyphosphaten (Nicht erfindungsgemäß)

Die Herstellung von sauren Polyphosphaten erfolgt über die Aufkonzentrierung einer teilneutralisierten Phosphorsäure mit anschließender thermischer Kondensation bei 500-700 ° C. Die dabei entstehende teilneutralisierte Polyphosphorsäure ist aufgrund der hohen Acidität und des stark ausgeprägten Komplexierungsvermögens gegenüber vielen Metallen äußerst aggressiv.
Verwendet wurde eine Vorrichtung gemäß Figur 1 - 4 mit einer Länge der Schmelzwanne von ca. 90 cm, einer Breite von ca. 4,8 cm und einer Höhe von 4,5 cm. Die Glaskohlenstoffbeschichtungen hatten eine Dicke von 0,5 cm und der Graphitaußenkörper eine Dicke von 1,6 cm.

Die ganze Vorrichtung befindet sich bei der Anwendung in einem Hohlraum in einem indirekt beheizten Röhrenofen. Die Art der Heizung ist nicht kritisch, sie kann auch induktiv erfolgen. Die verwendeten Materialien machen eine Sättigung der Schmelzzonenatmosphäre mit Stickstoff erforderlich aufgrund der Oxidierbarkeit des Graphits bei Temperaturen über 500 °C durch Luftsauerstoff.
Die Natriumphosphatlösung wird auf ein Na:P-Verhältnis von 0.5152 eingestellt (P₂O₅ = 43,93 %). In einem Vorlagegefäß wird die Phosphatlösung vorgelegt und mit einer Heizplatte mit Temperaturregler temperiert. Dabei wird die Lösung mit einem Kreuzblattrührer und einem Rührwerk leicht gerührt. Über eine Saugleitung und eine Membrandosierpumpe mit einem Edelstahlkopf wird die Fördermenge mit einer Dosiersteuereinheit eingestellt und durch das Glaskohlenstoffrohr in die beschriebene Schmelzwanne gefördert. Die Schmelzwanne befindet sich in einem Schutzrohr, das in einen Röhrenofen (Typ F 500; Fa. GERO) geschoben wird. Das Schutzrohr wird mit Stickstoff (200 l/min) gespült. Die Schmelze (Temperatur 550 °C) fließt durch eine Öffnung in der Schmelzwanne ab und erstarrt auf einer gekühlten Stahl /V4A / - Rüttelrinne, wo das erstarrte Phosphatglas in einzelnen Portionen von ca. 5 mm Schichtdicke abbricht und in eine Metallwanne gerüttelt wird. Das Phosphat wird im Exsikkator gesammelt und anschließend nach einer Vorzerkleinerung in einer Mühle (Sieb 1 mm) bei 18000 min⁻¹ gemahlen.

Das dabei erhaltene Produkt hat die folgende Spezifikation:

| | |
|---|---|
| Na₂O | 17-18,5% |
| P₂O₅ | 75 - 77,5 % |
| pH (1 %ig) | < 1 |
| Kettenlänge (mittel) | 20 - 30 |
| Glühverlust | 4-8% |
| Löslichkeit | in 30 Minuten nahezu klar löslich |

### Beispiel 2: Herstellung von langkettigen oligomeren Alkalipolyphosphaten (Nicht erfindungsgemäß)

Eine gesättigte auf 90° C gehaltene teilneutralisierte Lösung hergestellt aus 60%iger Phosphorsäure und 50%lger Natronlauge wird im Molverhältnis Na/P von 10/8 = 1,25 wie in Beispiel 1 beschrieben in den Reaktor gefördert. Das Schutzrohr wird mit Stickstoff gespült. Durch Erhitzen auf 690 °C wird eine Schmelze gewonnen, die nach Erstarren die gewünschten Eigenschaften hat. Insbesondere wird eine durch lonenchromatographie bestimmte sehr enge Kettenlängenverteilung völlig überraschend vorgefunden. Diese engen Verteilungen sind für bestimmte Anwendungsfälle gewünscht und von Interesse.

| | |
|---|---|
| Na₂O | 34,9 % |
| P₂O₅- Gehalt: | 64,7 % |
| Kettenlängenverteilung: | n = 7 - 9 der Formel Na₂O₄P - (PO₃Na)ₙ₋₂ - PO₃Na₂ |

Es zeigt sich, daß durch Variation von Na/P- Verhältnis, definierter Energiezufuhr und Einstellung der Schmelztemperatur völlig analoge Produkte mit P₂O₅- Gehalten von
60 - 69,7 % herstellen lassen.

### Beispiel 3: Herstellung von Natriummonofluorophosphat (Erfindungsgemäß)

Die Herstellung dieser Verbindung erfolgt in einer Vorrichtung gemäß Figur 5. Hier werden die Ausgangsmaterialien in fester Form aufgegeben.
Ein Gemisch aus vorgetrocknetem Natriumfluorid (NaF) und Natriumtrimetaphosphat (NaPO₃)ₓ wird durch eine regelbare Dosierschnecke in stöchiometrischen Verhältnissen P/F = 1 in den Reaktor gefördert. Der Reaktor wird wie oben beschrieben durch Zufuhr mit getrocknetem Stickstoff (V= 1 l/min) gegen Feuchtigkeits- und Sauerstoffzutritt gesperrt. Durch definierte Energiezufuhr und Regelung der Temperatur der Schmelze auf 640 °C wird ein ungewohnt reines Natriummonofluorophosphat gewonnen. Ein derartig reines Produkt ist für die Kosmetikindustrie und pharmazeutische Einsatzzwecke von großem Interesse.

| | |
|---|---|
| Gehalt: | SMFP > 99% |
| | Freier Fluoridgehalt < 0,1 % |

### Bezugszeichenliste

- 1: Reaktor
- 1a: Boden
- 1b: Längswände
- 1c: Stirnwände
- 2: Glaskohlenstoffplatte (Boden)
- 3: Glaskohlenstoffplatte (Stirnseite)
- 4: Auslaß
- 5: Abdeckung
- 6: Verschraubung
- 7: Glaskohlenstoffrohr/Ableitung
- 8: Zuleitungsrohr
- 9: Glaskohlenstoffplatte (Längswand)
- 10: Nuten
- 21: Reaktor
- 22: Innenwand
- 23: Zwischenschicht
- 24: Außenwand
- 25: Flanschverbindungen
- 26: Heizmantel
- 27: Stickstoffzufuhr
- 28: Befülltrichter
- 29: Füllstandsmelder

## Patentansprüche

1. Vorrichtung zur Herstellung von korrosiv wirkenden und sauren Phosphatschmelzen, bestehend aus einem gasdichten, horizontal oder vertikal aufgestellten, Reaktor, der induktiv oder mit Hilfe von Kohlenstoff-Heizelementen beheizbar ist und zur Aufnahme von flüssigen und/oder festen Ausgangsmaterialien ausgelegt ist, **dadurch gekennzeichnet, daß** die Reaktorwand in Sandwichbauweise aus drei Schichten aufgebaut ist, wobei die äußere Schicht aus Keramik, die 2. Schicht aus Graphit, bestehend aus Graphitkügelchen mit einem Durchmesser von 1,0 bis 10 mm und einer 3. Glaskohlenstoffschicht mit einer Dicke von 0,01 bis 10 mm, besteht.

2. Vorrichtung nach Anspruch 1, **dadurch gekennzeichnet, dass** die Graphitschicht eine Schichtdicke von 10 bis 50 mm und die Glaskohlenstoffschicht eine Dicke von 0,2 bis 0,5 mm aufweist.

3. Vorrichtung nach den Ansprüchen 1 bis 2, **dadurch gekennzeichnet, daß** der Reaktor in Form einer Schmelzwanne vertikal aufgestellt ist und die Ausgangsmaterialien in fester Form in den Reaktor geführt werden, können.

4. Vorrichtung nach den Ansprüchen 1 bis 3, **dadurch gekennzeichnet, dass** der Reaktor horizontal aufgestellt ist und die Ausgangsmaterialien in flüssiger Form in den Reaktor geführt werden, können.

5. Herstellung von korrosiven Phosphatschmelzen durch Umsetzung von festen Ausgangsmaterialien oder konzentrierten wässrigen Lösungen durch Erhitzen in Reaktoren gemäß den Ansprüchen 1 bis 4 und Abziehen der gebildeten schmelzflüssigen Phosphate.

## Claims

1. Device for producing corrosive and acidic phosphate melts, comprising a gas-tight reactor arranged horizontally or vertically, which may be heated inductively or using carbon heating elements and is designed for receiving liquid and/or solid starting materials, **characterised in that** the reactor wall is constructed in a sandwich structure from three layers, comprising an outer ceramic layer, a 2. graphite layer made from graphite spheres with a diameter of between 1.0 mm and 10 mm and a 3. vitreous carbon layer with a thickness of between 0.2 mm and 10 mm.

2. Device according to Claim 4, **characterised in that** the graphite layer has a layer thickness of between 10 mm and 50 mm and the vitreous carbon layer has a thickness of between 0.01 mm and 0.5 mm.

3. Device according to the claims 1 to 2, **characterised in that** the reactor is arranged vertically and the starting materials are fed into the reactor in solid form.

4. Device according to the claims 1 to 3, **characterised in that** the reactor in the form of a melting tank is arranged horizontally and the starting materials are fed into the reactor in liquid form.

5. Production of corrosive phosphate melts by conversion of solid starting materials or concentrated aqueous solutions by heating in reactors according to the claims 1 to 4 and drawing off of the molten phosphates formed.

## Revendications

1. Dispositif servant à la fabrication de fusions de phosphate, se composant d'un réacteur horizontal ou vertical étanche au gaz pouvant être chauffé de manière inductive ou à l'aide d'éléments de chauffe au carbone et étudié pour recevoir des matériaux initiaux liquides et/ou solides, **caractérisé en ce** sens que la paroi du réacteur en construction sandwich se compose de trois couches, la couche extérieure étant en céramique, la 2^{e} couche en graphite, composé de petites billes de graphite d'un diamètre de 1,0 à 10 mm, et d'une 3^{e} couche de carbone vitreux d'une épaisseur de 0,01 à 10 mm.

2. Dispositif selon revendication 1, **caractérisé en ce** sens que la couche de graphite présente une épaisseur de 10 à 50 mm et que l'épaisseur de la couche de carbone vitreux varie entre 0,2 et 0,5 mm.

3. Dispositif selon les revendications 1 à 2, **caractérisé en ce** sens que le réacteur en forme de cuve de fonte se trouve à la verticale et que les matériaux initiaux peuvent être amenés dans le réacteur sous une forme solide.

4. Dispositif selon les revendications 1 à 3, **caractérisé en ce** sens que le réacteur se trouve à l'horizontale et que les matériaux initiaux sont amenés dans le réacteur sous forme liquide.

5. Fabrication de fusions de phosphate corrosives par transformation de matériaux initiaux solides ou de solutions aqueuses concentrées par réchauffement dans les réacteurs selon les revendications 1 à 4 et enlèvement des phosphates liquides en fusion formés.
